# EUROPEAN PATENT SPECIFICATION

(11) **EP 3 140 640 B1**
(45) Date of publication and mention of the grant of the patent: **28.11.2018**
(21) Application number: 15731116.8
(22) Date of filing: 19.05.2015
(51) Int. Cl.: G01N 21/90, B07C 5/34

(54) **INSPECTION MACHINE AND INSPECTION METHOD**
PRÜFMASCHINE UND PRÜFVERFAHREN
MACHINE D'INSPECTION ET PROCÉDÉ D'INSPECTION

(43) Date of publication of application: 15.03.2017
(73) Proprietor: G.F. S.p.A., 43040 Solignano (Parma) (IT)
(72) Inventor: SERVENTI, Franco, I-43040 Varano Dè Melegari (Parma) (IT)
(74) Representative: Monelli, Alberto
(86) International application number: PCT/IB2015/053689
(87) International publication number: WO 2016/185251

(56) References cited:
- EP-A1- 0 635 452
- JP-A- H11 101 754
- JP-A- 2010 181 231
- US-A- 4 442 934
- US-A- 5 137 136

## Description

### Technical field

The present invention relates to an inspection machine and an inspection method of a container and/or its contents.

### Background art

Inspection machines are known comprising a gripper of the neck of the container. To be able to perform an inspection of the container the gripper (and therefore the container) is made to rotate on itself.

If such rotation takes place at high speed, notable turbulence can be generated within the liquid contained in the container. This generates bubbles that hinder or even prevent the correct inspection of the liquid. Such turbulence is induced or however accentuated by the fact that the neck of the container normally has an unperceivable axis misalignment with respect to the rest of the container.

Machines, as disclosed in EP0635452, JP-A-2010 181231, US-A-5137136, JP H11 101754 are also known.

### Disclosure of the invention

In this context, the technical task underpinning the present invention is to propose a machine and a method for inspecting the contents of a container that allow the limits of the prior art to be overcome. In particular an object of the present invention is to succeed in making the identification of foreign particles within the liquid contained in it more accurate. Another important object is that of minimising maintenance operations and machine downtime.

The technical task set and the objects specified are substantially attained by an inspection machine as disclosed in Claim 1.

### Brief description of drawings

Additional features and advantages of the present invention will become more apparent from the approximate and thus non-limiting description of a preferred but not exclusive embodiment of an inspection machine and method for identifying foreign particles in the liquid of a container, as illustrated in the appended drawings, in which:
- Figure 1 illustrates a first embodiment of an inspection machine according to the present invention.
- Figure 2 shows a sectional view of a detail of Figure 1;
- Figure 3 shows a sectional view according to the A-A plane of Figure 1;
- Figure 4 illustrates a second embodiment of an inspection machine according to the present invention.
- Figure 5 shows a schematic view of a detail of the second embodiment.

### Detailed description of preferred embodiments of the invention

In the accompanying drawings, reference number 1 indicates an inspection machine according to the present invention. The inspection machine 1 comprises:
i) a plurality of operating stations 20 each of which in turn comprises:
   - a lower support 21 of a container to be inspected, said support 21 being able to rotate idly on itself around a rotation axis 210;
   - means 22 for dragging in rotation the container about said axis 210, said dragging means 22 being motive means and positioned above said support 21; the dragging means 22 are separate from the support 21;
ii) optical inspection means 3 for inspecting the container and/or its contents (appropriately the optical means 3 comprise a video camera). The lower support 21 is intended to support the container. It is preferably a plate. Appropriately it comprises a bearing that allows it to rotate idly. The rotation axis 210 is substantially vertical. The rotation axis 210 substantially coincides with the positioning axis of the container on the support 21. Appropriately the support 21 comprises a transparent portion. Preferably such transparent portion affects a central portion of the support 21. This facilitates the lighting of the container by lighting means (that are usually lower than the support 21). Appropriately the optical means 3 support (or however are integral with) the lighting means of the container.

Advantageously the inspection machine 1 comprises a turntable 2. Such turntable 2 in turn comprises said plurality of stations 20. The stations 20 extend along the perimeter of the turntable 2. In particular the stations 20 extend along the whole circumferential perimeter of the turntable 2.

The support 21 can perform a revolution motion about a central axis of the turntable 2. At least one part of the dragging means 22 performs such revolution motion along with the support 21.

At least one portion of the dragging means 22 (in particular the bell 7 or the gripper 221 defined below) can be raised and lowered with respect to a horizontal, fixed and imaginary plane 220. In this way the dragging means 22 can be adapted to different container heights. Such adaptation takes place before introducing containers of different formats into the inspection machine with respect to those previously used. This takes place for example through adjustment means 800.

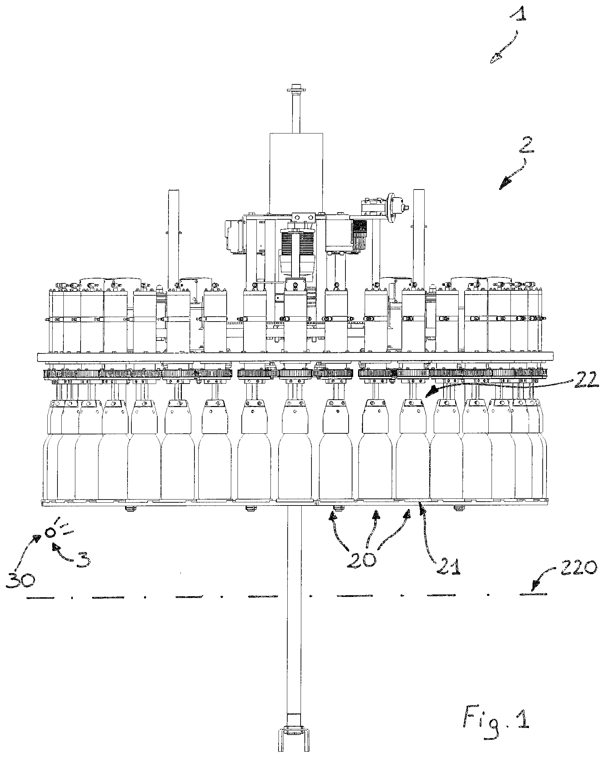

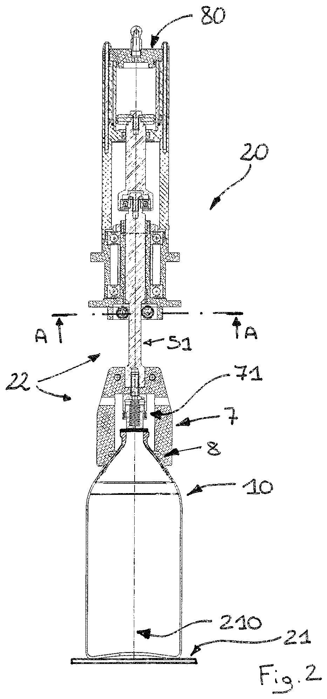

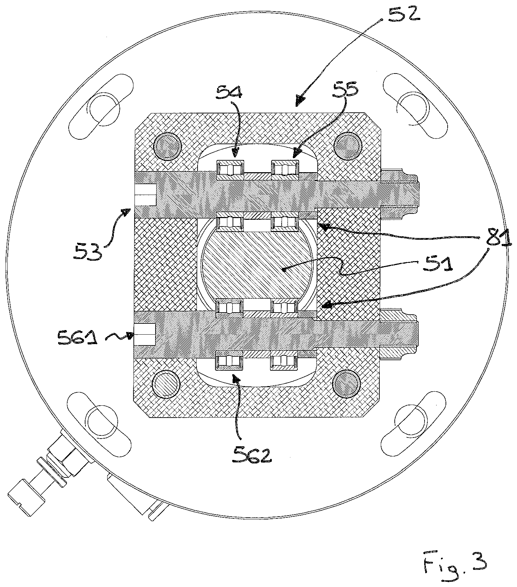

The dragging means 22 may be of various types. In a first embodiment (see figures 1-3) they comprise friction means for transmitting motion to the container. In particular the dragging means 22 comprise a bell 7 that rests on the container (preferably on a portion of the container facing upwards). The bell 7 therefore allows the transmission of motion by friction to the container. Appropriately within the bell 7 there is a release system 71 of the dragging means 22. Such release system 71 minimises the risk of the container getting stuck and constrained to the bell 7. Such release system 71 comprises an elastically retro-activated presser element. When the bell and the container are operatively coupled, elastic means of the presser element are compressed and perform the action of moving the presser element away from the container. In such first embodiment advantageously the supports 21 of the various stations 20 of the turntable 2 remain aligned at the same fixed height during the operation of the turntable 2.

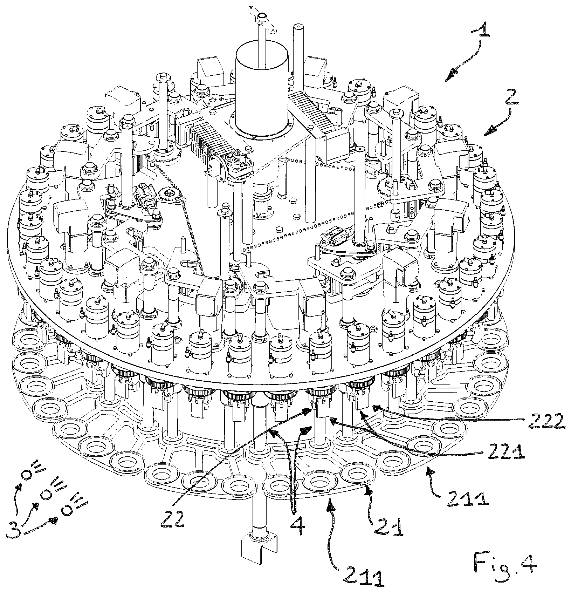

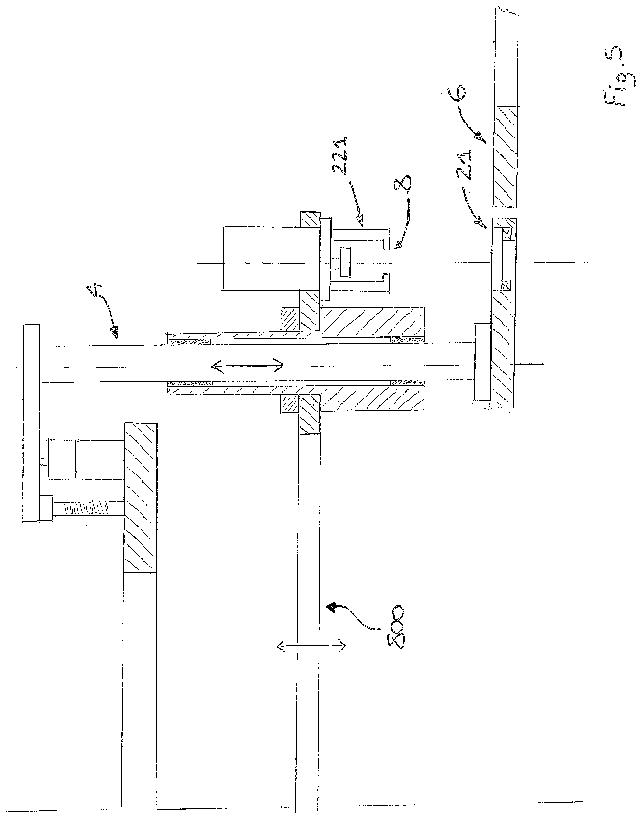

In a second embodiment (see figures 4 and 5) the dragging means 22 comprise a gripper 221 that grasps the container. In particular the gripper 221 is a gripper for gripping the neck of the container.

Such a gripper 221 potentially allows the container to be supported even if the container is not resting on the support 21.

The inspection machine 1 may comprise means 4 for lowering the lower support 21 (for example this affects the second embodiment described above). In this way the lower support 21 may be moved from a first position in which it is intended to come into contact with the bottom of the container to a second position wherein it is moved away from the container. This advantageously allows or however facilitates the inspection of a bottom of the container by optical means 3. The lowering means 4 advantageously comprise a fluid dynamic piston. Such fluid dynamic piston in a particular operating mode also allows the container to be compressed against the dragging means 22 for increasing the stability of the system. However, in this case the fluid dynamic piston exerts pressure acting in the opposite direction with respect to the pressure needed to lower the support 21. Advantageously (see figure 4) three supports 21 suitable to support corresponding containers are integrated into the same body that is moved integrally by the piston.

Appropriately the optical means 3 comprise a plurality of video cameras 30 for inspecting corresponding containers placed on corresponding supports 21 integrated into the same support 211.

Reference is made to figures 1-3. Appropriately the dragging means 22 comprise:
- contact means 8 with the container (in particular the contact means 8 comprise/coincide with said bell 7);
- a stem 51 which supports said contact means 8 in particular the bell 7; said stem 51 appropriately extends vertically;
- a sleeve 52 which surrounds the stem 51 and which is operatively coupled to an electric motor; appropriately a single electric motor activates three sleeves of different adjacent stations 20;
- transmission means 81 of a rotary motion from the sleeve 52 to the stem 51 and in turn comprising:
   i) an eccentric pin 53 around which a first bearing 54 is wound:
   ii) a support element 561 of a second bearing 562, said support element 561 of the second bearing 562 being constrained to the sleeve 52; said stem 51 being in contact with and interposed between the first and the second bearing 54,562; appropriately the first bearing 54 is part of a first pair 54, 55 of bearings assembled around the eccentric pin 53 and placed in contact with the stem 51. Appropriately the eccentric pin 53 and the support element 561 extend horizontally.

The eccentric pin 53 allows the adjustment of the position of the first pair of bearings 54, 55 so that they are always in contact with the stem 51. The eccentric pin 53 hence allows some play to be recovered. An inner diameter of the first pair of bearings 54, 55 is in contact with the pin 53 while an outer diameter of the first pair of bearings 54, 55 is in contact with the stem 51.

Appropriately the inspection machine 1 comprises movement means 80 towards the top or the bottom of the stem 51 (and therefore of the contact means 8, in particular of the bell 7). The movement means 80 allow the movement of the bell 7 between a first position in which it is in contact with the container and a second position in which it is moved further away from the support 21 with respect to in the first position. In the first position the bell 7 transmits motion to the container, in the second position it allows the introduction and removal of the container with respect to the bell 7. The first and the second bearing 54, 562 facilitate the reciprocal sliding upwards or downwards of the stem 51 and the sleeve 52 caused by said movement means 80.

Reference is now made to the embodiment exemplified in Figures 4 and 5.

The inspection machine 1 comprises an inlet slide 6 of the container into the turntable 2; in a first configuration said support 21 is substantially level with said inlet slide 6. In this way the container passes from the support 21 to the slide 6 without any sudden level variations. Likewise, in the first configuration the support 21 is substantially level with an outlet slide of the container from the turntable 2. In a second configuration said support 21 is lowered with respect to said first configuration. In this way it is possible to inspect the bottom of the container better, for example, to look for foreign particles. In a third configuration said support 21 is higher than in said first configuration so as to compress the support 21 against the contact means 8. In this way the system is stiffened and the rotation speed of the support 21 can be increased. The use of the adjectives first, second and third along with the word configuration aims to distinguish the various configurations from one another and does not intend to indicate a time order in which these configurations are assumed.

The subject matter of the present invention is also an inspection method for inspecting the liquid contained in a container. This method can be implemented by an inspection machine having one or more of the characteristics described hereinabove. The method comprises the steps of:
- positioning the container 10 on a lower support 21 afforded in a turntable 2 of an inspection machine 1;
- dragging in rotation on itself the container 10 placed on the lower support 21 which rotates idly with the container 10 (this takes place appropriately through dragging means 22);
- inspecting the container 10 and/or its contents through optical means 3. Appropriately the step of inspecting the container can take place at least partially while the container 10 is not rotating on itself. Such inspection aims to detect the presence of light particles in the container 10.

Appropriately the step of inspecting the container can take place at least partially during the rotation of the container on itself. In technical jargon this type of inspection is called a cosmetic inspection and aims to find faults in the container or the presence of heavy particles. In that case the step of dragging the container 10 on itself envisages turning the container 10 on itself first at a higher speed and then at a lower speed. The step of inspecting the contents of the container 10 is in that case simultaneous to the step of making the container 10 rotate at a lower speed (and does not actually affect the step in which the container rotates at said higher speed). However, the inspection step indicated above takes place with the container 10 on the turntable 2.

Advantageously the turntable 2 comprises a plurality of adjacent stations 20 comprising corresponding supports 21 and dragging means 22. Such stations 20 are arranged along the perimeter of the turntable 2. In particular they are equally spaced along the circular perimeter of the turntable 2. Said stations 20 have one or more of the characteristics explicitly described in this disclosure with reference to one station 20.

The step of positioning the container 10 on the support 21 takes place as the container is let into the turntable 2. It is accompanied or followed by the step of holding the container 10 at its neck (or at an upper portion of it) and supporting the container through said support 21 on which the bottom of the container 10 is resting.

The step of positioning the container 10 on the support 21 envisages the container 10 passing from an inlet slide 6 into the turntable 2 to said support 21. Appropriately in that step the support 21 and an outlet end of the inlet slide 6 are substantially at the same height. Appropriately, as exemplified in figures 1-3, the step of holding the container 10 at its neck envisages making at least one part of the dragging means 22 descend from above. In that case the dragging means 22 transmit motion due to friction to the container 10. Appropriately the step of making the at least one part of the dragging means 22 descend from above envisages making a bell 7 descend which places the container 10 in rotation.

The step of dragging the container 10 in rotation on itself comprises the step of transmitting the rotatory motion to the container at the neck of the container 10 itself. The container 10 rotates in this way about a vertical rotation axis. In particular the container 10 rotates about an axis orthogonal to a plane identified by a contact zone of the container with the support 21. The rotation axis substantially coincides with the cylindrical axis of symmetry of the container 10.

Reference is made to the embodiment of Figure 1-3.

The step of dragging the container 10 in rotation on itself comprises the step of placing a sleeve 52 in rotation which is wrapped around a stem 51 integrated into the dragging means 22.

The sleeve 52 transmits motion to the stem 51 through:
- an eccentric pin 53 around which a first bearing 54 is assembled; and
- an element 561 supporting a second bearing 562; the stem 51 being interposed between and in contact with the first and the second bearing 54, 562. The eccentric pin 53 and the support element 561 are constrained to the sleeve 52.

Appropriately the sleeve 52 transmits the motion through a first pair 54, 55 of bearings assembled on the eccentric pin 53 and in contact with the stem 51. The first pair 54, 55 of bearings comprises the first bearing 54. The eccentric pin 53 allows the position of the first pair of bearings 54, 55 to be adjusted so that they are always in contact with the stem 51. Appropriately said support element 561 comprises an additional pin constrained to the sleeve 52. Around the additional pin a second pair of bearings is wound comprising said second bearing 562.

Appropriately the support 21 remains fixed at a predetermined height for the entire rotation of the turntable 2. In that case the dragging means 22 preferably comprise said bell 7 which transmits motion to the container 10 by friction.

Reference is now made to figures 4 and 5.

Appropriately the support 21 is lowered and raised during a complete rotation of the turntable 2. In that case in a first stretch of the rotation of the turntable 2 the container 10 rotates on itself at a first predetermined speed, in a second stretch of the rotation of the turntable 2 said support 21 is lowered away from the container 10 away which remains suspended to gripping means 22 that drag it in rotation on itself. The gripping means 222 comprise a gripper 221. Appropriately the gripper 221 comprises two arms that clench together and an interposed presser element. The second stretch is subsequent to the first stretch and in said second stretch the container 10 rotates on itself at a second predetermined speed (possible zero) lower than said first predetermined speed; in said second stretch the optical means 3 inspect the contents of the container 10 placed at the lower bottom of the container 10. Since in the second stretch the container 10 rotates on itself more slowly than in the first stretch, the generation of bubbles within the liquid is contained (it must be remembered that the bubbles can disturb the images acquired by the optical means 3).

The second stretch is downstream of the first stretch considering the movement of a container 10 from an inlet zone into the turntable 2 to an outlet zone from the turntable 2.

In the first stretch the support 21 is at a higher height with respect to that of the inlet slide 6. Such lifting as described previously allows the container to be kept more stable allowing higher rotation speeds.

The step of inspecting the contents of the container 10 comprises in particular the step of inspecting a bottom of the container 10. Appropriately during the step of inspecting the bottom of the container the optical means 3 are at least partly placed below the support 21. A transparent portion of the support 21 facilitates the lighting of the container by luminous means placed below the support 21. In this way, the image detection is improved.

The present invention enables many advantages to be achieved. A first advantage is connected with the fact that the container can be placed in rotation maintaining maximum stability. Making the container rotate while holding it firmly at the lower and upper ends allows the risk of generating vibrations or off-axis rotations to be minimised which would determine an increase in turbulence and the production of bubbles (which hinder the identification of foreign particles within the container).

A further important advantage is connected with the fact that the means that move the rotation of the container about the rotation axis are in the upper part of the container. In the event of a container breaking (they are typically made of glass) there is no risk of having to stop the machine to prevent pieces of glass getting into the movement gears and damaging them.

Another important advantage is connected with the possibility to lower the lower support 21 in order to prevent the interposition of obstacles between the bottom of the container and the optical image acquisition means.

The invention as conceived is susceptible to numerous modifications and variants, all falling within the scope of the inventive concept characterised thereby. Furthermore all the details can be replaced by other technically equivalent elements. In practice, all the materials used, as well as the dimensions, can be any according to requirements.

## Claims

1. An inspection machine comprising:
i) a plurality of operating stations (20);
ii) a turntable (2) in turn comprising said plurality of operating stations (20), said operating stations (20) extending along the perimeter of the turntable (2);
iii) optical inspection means (3) of a container and/or its contents;
**characterised in that** each operating station in turn comprises:
- a lower support (21) of the container to be inspected, said support (21) being able to rotate idly on itself around a rotation axis (210); the support (21) being able to perform a revolution motion about a central axis of the turntable (2);
- means (22) of dragging in rotation the container around said axis (210), said dragging means (22) being motive means and positioned above said support (21); at least one part of the dragging means (22) performing such revolution motion along with the support (21);
said dragging means (22) comprise a gripper (221) of the neck of the container; said inspection machine (1) comprising lowering means (4) of the lower support (21) to allow inspection of a bottom of a container by said optical means (3).

2. The inspection machine according to claim 1, **characterised in that** the optical means (3) comprise a plurality of video cameras (30) for inspection of corresponding containers placed on corresponding supports (21) integrated into the same support (211).

3. The inspection machine according to any one of the previous claims, **characterised in that** it comprises an input slide (6) of the container in the turntable (2); in a first configuration said support (21) being substantially level with said input slide (6), in a second configuration said support (21) being lowered with respect to said first configuration.

4. The inspection machine according to any one of the previous claims, **characterised in that** the dragging means (22) comprise:
- contact means (8) with the container;
- a stem (51) which supports said contact means (8);
- a sleeve (52) which surrounds the stem (51) and which is operatively coupled to an electric motor;
- transmission means (81) of a rotary motion from the sleeve (52) to the stem (51) and in turn comprising:
i) an eccentric pin (53) attached to the sleeve (52) and around which a first bearing (54) is wound;
ii) a support element (561) of a second bearing (562), said support element (561) of the second bearing (562) being attached to the sleeve (52); said stem (51) being in contact with and interposed between the first and the second bearing (54, 562);
- means of upward or downward movement (80) of said stem (51) so as to allow the contact means (8) to connect with or release the container; said first and said second bearing (54, 562) assisting reciprocal sliding of the stem (51) and the sleeve (52) caused by said movement means (80).

5. The inspection machine according to any one of the previous claims, **characterised in that** it comprises means of approach/distancing of at least one portion of the dragging means (22) with respect to a horizontal plane (220), fixed and imaginary, so as to adapt to the different heights of the container placed on the support (21).

## Patentansprüche

1. Prüfmaschine, umfassend:
i) eine Vielzahl an Bearbeitungsstationen (20);
ii) einen Drehtisch (2), der wiederum die Vielzahl an Bearbeitungsstationen (20) umfasst, wobei sich die Bearbeitungsstationen (20) entlang des Umfangs des Drehtischs (2) erstrecken;
iii) optische Prüfmittel (3) eines Behälters und/oder dessen Inhalten,
**dadurch gekennzeichnet, dass** eine jede Bearbeitungsstation wiederum umfasst:
- eine untere Halterung (21) des zu prüfenden Behälters, wobei die Halterung (21) in der Lage ist, sich spannungslos um eine Rotationsachse (210) zu drehen, wobei die Halterung (21) in der Lage ist, eine Umdrehungsbewegung um eine mittlere Achse des Drehtischs (2) auszuführen;
- Mittel (22), um den Behälter in Drehung rund um die Achse (210) zu schleppen, wobei die Schleppmittel (22) Bewegungsmittel und über der Halterung (21) positioniert sind, wobei mindestens ein Teil der Schleppmittel (22) diese Umdrehungsbewegung zusammen mit der Halterung (21) durchführt,
wobei die Schleppmittel (22) einen Greifer (221) des Halses des Behälters umfassen, wobei die Prüfmaschine (1) Absenkmittel (4) der unteren Halterung (21) umfasst, um die Prüfung einer Unterseite eines Behälters durch die optischen Mittel (3) zu erlauben.

2. Prüfmaschine nach Anspruch 1, **dadurch gekennzeichnet, dass** die optischen Mittel (3) eine Vielzahl an Videokameras (30) zum Prüfen entsprechender Behälter umfassen, die auf entsprechenden Halterungen (21) platziert sind, die in der Halterung (211) integriert sind.

3. Prüfmaschine nach einem der vorhergehenden Ansprüche, **dadurch gekennzeichnet, dass** sie einen Eingabeschieber (6) des Behälters in den Drehtisch (2) umfasst, wobei die Halterung (21) in einer ersten Konfiguration im Wesentlichen auf gleicher Höhe mit dem Eingabeschieber (6) ist, wobei die Halterung (21) in einer zweiten Konfiguration im Vergleich zur ersten Konfiguration abgesenkt ist.

4. Prüfmaschine nach einem der vorhergehenden Ansprüche, **dadurch gekennzeichnet, dass** die Schleppmittel (22) umfassen:
- Kontaktmittel (8) mit dem Behälter;
- einen Schaft (51), der die Kontaktmittel (8) stützt;
- eine Hülse (52), die den Schaft (51) umgibt und die betriebswirksam mit einem Elektromotor gekoppelt ist;
- Übertragungsmittel (81) einer Drehbewegung von der Hülse (52) auf den Schaft (51) und wiederum umfassend:
i) einen Exzenterzapfen (53), der an der Hülse (52) angebracht ist und um diese ein erstes Lager (54) gewunden ist;
ii) ein Halterungselement (561) eines zweiten Lagers (562), wobei das Halterungselement (561) des zweiten Lagers (562) an der Hülse (52) angebracht ist, wobei der Schaft (51) in Kontakt mit dem ersten und dem zweiten Lager (54, 562) und zwischen diesen angeordnet ist;
- Mittel einer Aufwärts- oder Abwärtsbewegung (80) des Schafts (51), sodass den Kontaktmitteln (8) ermöglicht wird, sich mit dem Behälter zu verbinden oder diesen freizugeben, wobei das erste und das zweite Lager (54, 562) das gegenseitige Verschieben des Schafts (51) und der Hülse (52), herbeigeführt durch die Bewegungsmittel (80), unterstützen.

5. Prüfmaschine nach einem der vorhergehenden Ansprüche, **dadurch gekennzeichnet, dass** sie Mittel zum Heranführen/Entfernen von mindestens einem Abschnitt der Schleppmittel (22) gegenüber einer horizontalen Ebene (220) umfasst, fix und imaginär, sodass der auf der Halterung (21) platzierte Behälter den verschiedenen Höhen angepasst wird.

## Revendications

1. Machine d'inspection comprenant :
i) une pluralité de postes opérationnels (20) ;
ii) une plaque tournante (2) comprenant à son tour ladite pluralité de postes opérationnels (20), lesdits postes opérationnels (20) se prolongeant le long du périmètre de la plaque tournante (2) ;
iii) des moyens optiques d'inspection (3) d'un récipient et/ou de son contenu ;
**caractérisée en ce que** chaque poste opérationnel comprend à son tour :
- un support inférieur (21) du récipient à inspecter, ledit support (21) pouvant tourner librement sur lui-même autour d'un axe de rotation (210) ; le support (21) pouvant effectuer un mouvement de révolution autour d'un axe central de la plaque tournante (2) ;
- des moyens (22) permettant d'entraîner en rotation le récipient autour dudit axe (210), lesdits moyens d'entraînement (22) étant des moyens moteurs et étant positionnés au-dessus dudit support (21) ; au moins une partie des moyens d'entraînement (22) effectuant ce mouvement de révolution le long du support (21) ;
lesdits moyens d'entraînement (22) comprennent un préhenseur (221) du goulot du récipient ; ladite machine d'inspection (1) comprenant des moyens d'abaissement (4) du support inférieur (21) pour permettre l'inspection d'un fond d'un récipient par lesdits moyens optiques (3).

2. Machine d'inspection selon la revendication 1, **caractérisée en ce que** les moyens optiques (3) comprennent une pluralité de caméras vidéo (30) pour l'inspection des récipients correspondants placés sur des supports correspondants (21) intégrés dans le même support (211).

3. Machine d'inspection selon l'une quelconque des revendications précédentes, **caractérisée en ce qu'**elle comprend un coulisseau d'entrée (6) du récipient dans la plaque tournante (2) ; dans une première configuration, ledit support (21) étant substantiellement au niveau dudit coulisseau d'entrée (6), dans une seconde configuration, ledit support (21) étant abaissé par rapport à ladite première configuration.

4. Machine d'inspection selon l'une quelconque des revendications précédentes, **caractérisée en ce que** les moyens d'entraînement (22) comprennent :
- des moyens de contact (8) avec le récipient ;
- une tige (51) qui supporte lesdits moyens de contact (8) ;
- un manchon (52) qui entoure la tige (51) et étant fonctionnellement couplé à un moteur électrique ;
- des moyens de transmission (81) d'un mouvement rotatif du manchon (52) à la tige (51) et comprenant à son tour :
i) une cheville excentrique (53) fixée au manchon (52) et autour de laquelle est enroulé un premier roulement (54) ;
ii) un élément de support (561) d'un second roulement (562), ledit élément de support (561) du second roulement (562) étant fixé au manchon (52) ; ladite tige (51) étant en contact avec et interposée entre les premier et second roulements (54, 562) ;
- des moyens de déplacement ascendant et descendant (80) de ladite tige (51) de sorte à permettre aux moyens de contact (8) de se relier au ou de se libérer du récipient ; lesdits premier et second roulements (54, 562) assistant le coulissement réciproque de la tige (51) et du manchon (52) provoqué par lesdits moyens de déplacement (80).

5. Machine d'inspection selon l'une quelconque des revendications précédentes, **caractérisée en ce qu'**elle comprend des moyens d'approche/d'éloignement d'au moins une partie des moyens d'entraînement (22) par rapport à un plan horizontal (220), fixe et imaginaire, de manière à s'adapter à des hauteurs différentes du récipient placé sur le support (21).
